# EUROPÄISCHE PATENTSCHRIFT

(11) **EP 3 974 279 B1**
(45) Veröffentlichungstag und Bekanntmachung des Hinweises auf die Patenterteilung: **15.05.2024**
(21) Anmeldenummer: 21195273.4
(22) Anmeldetag: 07.09.2021
(51) Int. Cl.: B61C 7/04, B61D 35/00

(54) **FAHRZEUG MIT BRENNSTOFFZELLENSYSTEM UND SANITÄRZELLE**
VEHICLE WITH FUEL CELL SYSTEM AND SANITARY CELL
VÉHICULE POURVU DE SYSTÈME DE PILE À COMBUSTIBLE ET CABINE SANITAIRE

(30) Priorität: 29.09.2020 DE 102020212224
(43) Veröffentlichungstag der Anmeldung: 30.03.2022
(73) Patentinhaber: Siemens Mobility GmbH, 81739 München (DE)
(72) Erfinder: Peymandar, De-Niang Maria, 41199 Mönchengladbach (DE)
(74) Vertreter: Siemens Patent Attorneys

(56) Entgegenhaltungen:
- WO-A1-2017/076333
- CN-A- 110 001 674
- CN-A- 111 169 257
- CN-A- 111 231 670
- DE-A1- 10 216 709
- US-A1- 2008 127 411

## Beschreibung

Die Erfindung betrifft ein Fahrzeug mit einem Brennstoffzellensystem und wenigstens einem Wasserbehälter zur Versorgung von wenigstens einer Wasserverbrauchseinrichtung einer Sanitärzelle oder einer Galley mit Wasser.

Elektrisch angetriebene Fahrzeuge mit Brennstoffzellen zur Erzeugung der Antriebsenergie sind aus dem Stand der Technik bekannt, gleichermaßen wie Fahrzeuge mit Sanitärzellen.

Aus der Brennstoffzellenchemie wird Wasser produziert, welches abgeführt und in die Umwelt entlassen wird. Das Entsorgen von Prozesswasser kann problematisch sein, da die Rohr- oder Schlauchleitung auf dem Wagendach unter freier Umgebung verlaufen. Diese müssen wärmeisoliert oder elektrisch beheizt werden, um ein Einfrieren des Prozesswassers zu verhindern.

Zur Versorgung der Frischwasserausgabestellen in Sanitärzellen von Fahrzeugen werden Frischwassertanks mitgeführt, die - meist täglich - frisch befüllt werden müssen. Die Frischwasserbehälter sind entsprechend groß dimensioniert, wodurch erheblicher Platz im Fahrzeug eingenommen wird und signifikant Gewicht mitgeführt wird.

Aus der US 2008/127411 A1 ist eine Sanitärzelle mit einem Brennstoffzellensystem zur unabhängigen Versorgung der Sanitärzelle mit Energie bekannt. Prozesswasser der Brennstoffzelle kann einem Frischwasserprozess der Sanitärzelle zugeführt werden. CN 111 231 670 A1 lehrt ein Fahrzeug zum Fahren in einer Vakuumröhre mit einer Brennstoffzelle zur Energieversorgung.

Der Erfindung liegt die Aufgabe zugrunde, die Energieeffizienz eines Fahrzeugs weiter zu verbessern.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Fahrzeug, beispielsweise ein Land-, Wasser- oder Luftfahrzeug, insbesondere ein Schienenfahrzeug, insbesondere des Personenverkehrs umfasst wenigstens ein Brennstoffzellensystem, umfassend wenigstens eine Brennstoffzelle, wenigstens eine Sanitärzelle und/oder eine Galley sowie wenigstens einen Wasserbehälter zur Versorgung von wenigstens einer Wasserverbrauchseinrichtung der Sanitärzelle oder der Galley. Wasserverbrauchseinrichtungen sind typischerweise Anlagen zur Ausgabe von Wasser, wie Wasserhähne oder andere Frischwasserausgabestellen oberhalb von Waschbecken oder Spülungen von Toiletten, gegebenenfalls auch als Wasserausgabeeinrichtungen bezeichnet. Das Brennstoffzellensystem weist wenigstens einen Prozesswasserauslass auf, welcher zur Abfuhr des beim Betrieb der Brennstoffzelle entstehenden Wassers dient. Dieser Prozesswasserauslass ist nun erfindungsgemäß mit dem wenigstens einen Wasserbehälter zur Versorgung der wenigstens einen Wasserverbrauchseinrichtung der Sanitärzelle oder der Galley wasserführend mittels wenigstens einer Rohrleitung verbunden, so dass das Prozesswasser vom Brennstoffzellensystem dem wenigstens einen Wasserbehälter über die wenigstens eine Rohrleitung zugeführt wird.

Das beim Betrieb des Brennstoffzellensystems produzierte Prozesswasser wird erfindungsgemäß aus dem Brennstoffzellensystem abgeführt und dem Wasserbehälter zur Versorgung von wenigstens einer Wasserverbrauchseinrichtung einer Sanitärzelle oder einer Galley mit Wasser zugeführt.

Dadurch kann für die Wasserverbrauchseinrichtung einer Sanitärzelle oder einer Galley mitgeführtes Wasser eingespart werden, was zu einem Raumgewinn im Fahrzeug durch kleinere Wassertanks sowie zu einem geringeren Gesamtgewicht und einem damit einhergehenden verringerten Energieverbrauch führen kann.

Das Fahrzeug ist elektrisch angetrieben. Das Brennstoffzellensystem ist entsprechend zur Versorgung des elektrischen Antriebs des Fahrzeugs mit Energie ausgebildet.

Bei dem wenigstens einen Wasserbehälter handelt es sich um einen Grauwasserbehälter.

Ein Frischwasserbehälter ist seinerseits mit einer Wasserverbrauchseinrichtung, beispielsweise einem Waschbeckenmodul verbunden. Der Grauwasserbehälter wiederum ist mit einer weiteren Wasserverbrauchseinrichtung, beispielsweise einem Toilettenmodul verbunden. Vorteilhaft ist die wenigstens eine Wasserverbrauchseinrichtung als Toilettenmodul ausgebildet, umfassend eine Spülvorrichtung für eine Toilette.

Aus Fahrzeugen, insbesondere in Schienenfahrzeugen, für Nah- und Fernverkehr sind Sanitärzellen und Galleys, auch Bordrestaurants genannt, bekannt, die Wasserverbraucher wie Toilettenmodule, Handwaschbecken oder Spülbecken, aber auch Spülmaschinen oder Getränkeautomaten, wie Kaffeemaschinen aufweisen, die jeweils mit Wasser zu versorgen sind. Das Wasser wird in entsprechenden Wasserbehältern oder -tanks gespeichert, die im oder am Fahrzeug, beispielsweise auf dem Dach befestigt, in das Dach eingelassen, im Unterflurbereich oder im Innenraum eingebracht sind.

Mit Frischwasser aus nachzufüllenden Frischwasserbehältern, welches üblicherweise Trinkwasserqualität aufweist, werden die Wasserverbrauchseinrichtungen versorgt, die zum Betrieb Frischwasser benötigen.

Grauwasser hingegen ist gering verschmutztes Abwasser, wie es üblicherweise beim Händewaschen in den Sanitäranlagen eines Schienenfahrzeugs anfällt. Auch eine Spül- oder Waschmaschine erzeugt Grauwasser. Es genügt keinen Frischwasservorschriften. Grauwasser wird beispielsweise zur Toilettenspülung im Schienenfahrzeug eingesetzt. So kann ein Handwaschbecken das durch einen Handwaschvorgang anfallende Grauwasser auffangen und in einen Grauwasserbehälter abführen, wo es gesammelt und dem Toilettenmodul zu dessen Spülvorgang zur Verfügung gestellt wird.

Bei dem aus dem Brennstoffzellensystem abgeführten und dem Wasserbehälter zugeführten Wasser handelt es sich um destilliertes Wasser. Da es keine Trinkwasserqualität aufweist, kann es zum Spülen der Toilette verwendet werden und daher dem Grauwasserbehälter zugeführt.

Gemäß einer weiteren Weiterbildung ist zumindest der Prozesswasserauslass des Brennstoffzellensystems im Bereich des wenigstens einen Wasserbehälters angeordnet. Dadurch kann die Rohrleitung kurz sein. Natürlich kann - je nach Größe des Brennstoffzellensystems - auch das gesamte Brennstoffzellensystem im Bereich des wenigstens einen Wasserbehälters zur Versorgung der Wasserverbrauchseinrichtungen der wenigstens einen Sanitärzelle oder Galley angeordnet sein. Das Brennstoffzellensystem kann dann so ausgerichtet sein, dass der Prozesswasserauslass in Richtung des Wasserbehälters führt.

Darüber hinaus ist das Brennstoffzellensystem im Dachbereich des Fahrzeugs angeordnet.

Dadurch kann die Rohrleitung zur wasserführenden Verbindung des Prozesswasserauslass des Brennstoffzellensystems und des Wasserbehälters frei von Wasserförderanlagen, beispielsweise Pumpen, sein. Das Prozesswasser wird rein schwerkraftbedingt in den Wasserbehälter geführt.

Sanitärzellen und damit auch die entsprechenden Wasserbehälter zur Versorgung der Wasserverbrauchseinrichtungen der Sanitärzelle mit Wasser sind üblicherweise im Bereich eines Einstiegs des Fahrzeugs angeordnet. Zumindest der Prozesswasserauslass des Brennstoffzellensystems kann dann ebenfalls im Bereich des Einstiegs des Fahrzeugs angeordnet sein, insbesondere im Dachbereich des Fahrzeugs.

Die wenigstens eine Rohrleitung zur wasserführenden Verbindung des Prozesswasserauslass des Brennstoffzellensystems und des Wasserbehälters verläuft nach einer weiteren Weiterbildung im Inneren des Fahrzeugs und somit innerhalb einer Außenhülle des Fahrzeugs. Bei Schienenfahrzeugen insbesondere innerhalb eines Wagenkastens des Schienenfahrzeugs. Zusätzlich oder alternativ kann die Rohrleitung wärmeisoliert sein, so dass das Wasser in der Rohrleitung bei vorgegebenen Temperaturen unter 0°C nicht gefriert.

Die Erfindung lässt zahlreiche Ausführungsformen zu. Sie wird anhand der nachfolgenden Figur näher erläutert, in der ein Ausgestaltungsbeispiel dargestellt ist.

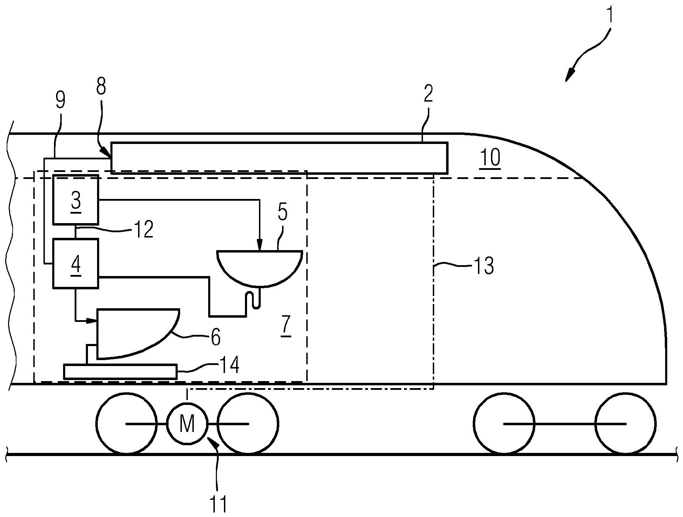

Die Figur zeigt schematisch ein Schienenfahrzeug 1 des Personenverkehrs mit einem im Dachbereich 10 des Schienenfahrzeugs 1 angeordneten Brennstoffzellensystem 2 zur Versorgung eines elektrischen Antriebs 11 des Schienenfahrzeugs 1 mit elektrischer Energie. Brennstoffzellensystem 2 und elektrischer Antrieb 11 sind über eine elektrische Leitung 13 miteinander gekoppelt. Im Bereich des Brennstoffzellensystems 2 ist im Inneren des Schienenfahrzeugs 1 eine Sanitärzelle 7 angeordnet, umfassend ein Waschbecken 5 und eine Toilette 6 sowie einen Frischwasserbehälter 3 zur Versorgung des Waschbeckens 5 und einen Grauwasserbehälter 4 zur Versorgung der Toilette 6 mit Wasser. Frischwasserbehälter 3 und Grauwasserbehälter 4 gelten im Sinne der Erfindung als Wasserbehälter zur Versorgung von Wasserverbrauchseinrichtungen, hier dem Waschbecken 5 und der Toilette 6, der Sanitärzelle 7 oder einer Galley mit Wasser.

Das Waschbeckenmodul umfasst einen Wasserhahn als Frischwasserausgabestelle umfasst, welcher oberhalb des Handwaschbeckens angeordnet ist, so dass das aus dem Wasserhahn austretende Frischwasser durch das Handwaschbecken aufgefangen wird, wodurch es in diesem Augenblick als Grauwasser gilt und entsprechend weiter als Grauwasser behandelt wird.

Das Grauwasser wird dem Grauwasserbehälter zugeleitet, wo es zur Versorgung einer Spüleinrichtung des Toilettenmoduls für die Toilette 6 genutzt werden kann.

Darüber hinaus weist das Brennstoffzellensystem 2 einen Prozesswasserauslass 8 auf, um beim Betrieb des Brennstoffzellensystems 2 durch die Brennstoffzellenchemie produziertes Prozesswasser abzuführen. Dieser Prozesswasserauslass 8 ist hier nun über eine Rohrleitung 9 mit dem Grauwasserbehälter 4 verbunden, so dass das aus dem Brennstoffzellensystem 2 abgeführte Prozesswasser dem Grauwasserbehälter 4 zugeführt wird. Anschließend kann das Wasser aus dem Grauwasserbehälter 4, umfassend das Prozesswasser aus dem Brennstoffzellensystem 2, einem Grauwasserprozess der Sanitärzelle 7, umfassend das Spülen einer Toilette 6, zugeführt werden.

In diesem Ausgestaltungsbeispiel sind auch der Frischwasserbehälter 3 und Grauwasserbehälter 4 mit Rohrleitungen 12 miteinander verbunden, so dass Frischwasser aus dem Frischwasserbehälter 3 in den Grauwasserbehälter 4 geführt werden kann, sollte der Wasserstand im Grauwasserbehälter 4 einen Minimalpegel unterschreiten.

Die Rohrleitungen 9 und 12 können isoliert sein, um ein Einfrieren des darin befindlichen Wassers zu verhindern.

Wie hier veranschaulicht, befindet dich das Brennstoffzellensystem 2 in der Nähe der Sanitärzelle 7 und ihrer Wasserbehälter 3, 4. Die Verbindung vom Prozesswasserauslass 8 bis zum Grauwasserbehälter 4 wäre somit sehr kurz.

Der Prozesswasserauslass 8 kann auch eine Rohrleitung zum Frischwasserbehälter 3 aufweisen. 14 kennzeichnet einen Abwassertank.

Die Brennstoffzelle erzeugt je nach Leistungsbedarf destilliertes Wasser, beispielsweise zwischen 1 und 12 L/h. Aus dem Leistungsbedarf kann nun das mittlere Gewicht des entstehenden Prozesswassers der Brennstoffzelle berechnet werden. Demensprechend kann das mitzuführende Wasser reduziert werden, da der Wassertank ständig mit "neuem" Wasser von der Brennstoffzelle befüllt wird. Dies wirkt sich auf die Gewichts-, Bauraum- und letztendlich Energiebilanz aus.

## Patentansprüche

1. Fahrzeug (1) mit einem Brennstoffzellensystem (2) und wenigstens einem Wasserbehälter (3, 4) zur Versorgung von wenigstens einer Wasserverbrauchseinrichtung (5, 6) einer Sanitärzelle (7) oder einer Galley mit Wasser, wobei das Fahrzeug (1) einen elektrischen Antrieb (11) umfasst, wobei das Brennstoffzellensystem (2) zur Versorgung des elektrischen Antriebs (11) mit Energie ausgebildet ist, wobei ein Prozesswasserauslass (8) des Brennstoffzellensystems (2) mit dem wenigstens einen Wasserbehälter (3, 4) mittels wenigstens einer Rohrleitung (9) verbunden ist, so dass Prozesswasser vom Brennstoffzellensystem (2) dem wenigstens einen Wasserbehälter (3, 4) über die wenigstens eine Rohrleitung (9) zuführbar ist, **dadurch gekennzeichnet,**
**dass** der wenigstens eine Wasserbehälter (3, 4) ein Grauwasserbehälter ist und wobei das Brennstoffzellensystem (2) im Dachbereich (10) des Fahrzeugs (1) angeordnet ist.

2. Fahrzeug nach einem Anspruch 1,
**dadurch gekennzeichnet,**
**dass** der Prozesswasserauslass (8) des Brennstoffzellensystems (2) im Bereich des wenigstens einen Wasserbehälters (3, 4) mit Wasser angeordnet ist.

3. Fahrzeug nach einem der Ansprüche 1 oder 2,
**dadurch gekennzeichnet,**
**dass** die wenigstens eine Rohrleitung (9) im Inneren des Fahrzeugs (1) angeordnet ist.

4. Fahrzeug nach einem der Ansprüche 1 bis 3,
**dadurch gekennzeichnet,**
**dass** die wenigstens eine Wasserverbrauchseinrichtung (5, 6) ein Toilettenmodul ist.

5. Fahrzeug nach einem der Ansprüche 1 bis 4,
**dadurch gekennzeichnet,**
**dass** das Fahrzeug (1) ein Schienenfahrzeug ist.

## Claims

1. Vehicle (1) having a fuel-cell system (2) and having at least one water container (3, 4) for supplying water to at least one water-consuming facility (5, 6) of a sanitary unit (7) or a galley, wherein the vehicle (1) comprises an electric drive (11), wherein the fuel-cell system (2) is configured for supplying energy to the electric drive (11), wherein a process-water outlet (8) of the fuel-cell system (2) is connected to the at least one water container (3, 4) by means of at least one pipeline (9), so that process water is able to be fed from the fuel-cell system (2) to the at least one water container (3, 4) via the at least one pipeline (9), **characterized in that** the at least one water container (3, 4) is a grey-water container, and wherein the fuel-cell system (2) is arranged in the roof region (10) of the vehicle (1).

2. Vehicle according to Claim 1,
**characterized**
**in that** the process-water outlet (8) of the fuel-cell system (2) is arranged in the region of the at least one water container (3, 4).

3. Vehicle according to either of Claims 1 and 2,
**characterized**
**in that** the at least one pipeline (9) is arranged in the interior of the vehicle (1).

4. Vehicle according to one of Claims 1 to 3,
**characterized**
**in that** the at least one water-consuming facility (5, 6) is a toilet module.

5. Vehicle according to one of Claims 1 to 4,
**characterized**
**in that** the vehicle (1) is a rail vehicle.

## Revendications

1. Véhicule (1) comprenant un système (2) de piles à combustible et au moins un réservoir (3, 4) d'eau pour l'alimentation d'au moins un dispositif (5, 6) consommateur d'eau, au moins un module (7) sanitaire ou une cambuse ayant de l'eau, dans lequel le véhicule (1) comprend un entraînement (11) électrique, dans lequel le système (2) de piles à combustible est constitué pour l'alimentation en énergie de l'entraînement (11) électrique, dans lequel une sortie (8) d'eau de processus du système (2) de piles à combustible communique avec le au moins un réservoir (3, 4) d'eau au moyen d'au moins une canalisation (9), de sorte que de l'eau de processus peut être envoyée par la au moins une canalisation (9) du système (2) de piles à combustible au au moins un réservoir (3, 4) d'eau, **caractérisé en ce que** le au moins un réservoir (3, 4) d'eau est un réservoir d'eau grise et dans lequel le système (2) de piles à combustible est disposé dans la partie (10) de toit du véhicule (1).

2. Véhicule suivant la revendication 1,
**caractérisé**
**en ce que** la sortie (8) d'eau de processus du système (2) de piles à combustible est disposée dans la partie du au moins un réservoir (3, 4) d'eau ayant de l'eau.

3. Véhicule suivant l'une des revendications 1 ou 2,
**caractérisé**
**en ce que** la au moins une canalisation (9) est disposée à l'intérieur du véhicule (1).

4. Véhicule suivant l'une des revendications 1 à 3,
**caractérisé**
**en ce que** le au moins un dispositif (5, 6) consommateur d'eau est un module de toilette.

5. Véhicule suivant l'une des revendications 1 à 4,
**caractérisé**
**en ce que** le véhicule (1) est un véhicule ferroviaire.
